# EUROPEAN PATENT APPLICATION

(11) **EP 2 251 790 A1**
(43) Date of publication of application: **17.11.2010**
(21) Application number: 08777155.6
(22) Date of filing: 12.06.2008
(51) Int. Cl.: G06F 11/30

(54) **SERVER DEVICE, METHOD OF DETECTING FAILURE OF SERVER DEVICE, AND PROGRAM OF DETECTING FAILURE OF SERVER DEVICE**

(30) Priority: 04.03.2008 JP 2008052815
(71) Applicant: Mitsubishi Electric Corporation, Tokyo 100-8310 (JP)
(72) Inventor: KOKUBU, Shunsuke, Tokyo 100-8310 (JP); HIGUCHI, Tsuyoshi, Tokyo 100-8310 (JP)
(74) Representative: Pfenning, Meinig & Partner GbR
(86) International application number: PCT/JP2008/060739
(87) International publication number: WO 2009/110111

(57) **Abstract**

It is an object to enable mapping of even a logical resource with a physical resource used by a respective host OS/guest OS. An agent execution unit 121 for detecting a fault in a physical resource comprises a resource mapping information generating unit 1211 for generating resource mapping information 1221 by mapping a logical resource to a physical resource of a server apparatus 100; a fault monitoring unit 1212 for collecting physical resource operating information 1224 indicating an operating condition of a physical resource; a fault determining unit 1213 for determining whether or not the physical resource information 1224 contains any information on a physical resource with a faulty operating condition, and, in case that there is a faulty physical resource, for identifying a virtual computer where a fault has occurred based on the information on the physical resource with a faulty operating condition and the resource mapping information 1221; and a fault notifying unit 1214 for notifying the identified virtual computer according to the information on the physical resource with a faulty operating condition.

## Description

### Technical Field

The present invention relates, for example, to a server apparatus provided with an agent function for detecting a hardware failure (fault) in a virtual environment, and to a fault detection method of a server apparatus.

### Background Art

In the conventional art, there are cluster systems (system-switching systems) in which, for improving system availability, two or more servers are configured redundantly so that if an active server becomes inoperative due to a failure, performance degradation, and so on, another standby server can take over the processing. On the other hand, there are an increasing number of cases where server aggregation is implemented by using virtualization technology for effective use of server resources and reduction of operating costs. In building a cluster server system using virtualized servers, there have been disclosed a method of controlling particular software or an OS (operating system) by monitoring failures in hardware or on a virtual environment (see Patent Document 1), and a method of controlling a virtual machine for a backup system by predicting failures based on given threshold information (see Patent Document 2).
Patent Document 1: JP2002-229806
Patent Document 2: JP2004-030363

### Disclosure of the Invention

### Problems to be Solved by the Invention

The following problems arise when a conventional cluster system among physical servers is used in a virtualized server apparatus (on a virtual environment).

(a) A guest domain (guest virtual machine) cannot keep track of resources of a management domain (host virtual machine). Thus, if a failure occurs in the management domain's resource which is required for operation of the guest domain, the guest domain cannot detect the failure.

(b) Even if a mechanism is introduced on the management domain for monitoring failures and notifying cluster software on the guest domain for the purpose of solving the above problem (a), the domain (virtual machine) can only recognize logical resources and thus the content of failure may not be notified properly depending on the content of failure.

Because of the above problems, although a hardware failure or performance degradation may cause the guest OS (or an application running on the guest OS) of the guest domain to behave unexpectedly, there is a possibility that the failure may not be detected properly, causing a secondary failure, such as data destruction, which may lead to detection of the failure for the first time.

As a means of solving the above problems, it is disclosed in Patent Document 1 that mapping information between physical resources and a host OS/guest OS is pre-stored in the host OS (the OS of the host domain), so that, if a hardware failure occurs, a guest OS to be affected by the hardware failure can be identified. The mapping information disclosed in Patent Document 1 is, however, pre-defined in a fixed manner by a designer and is intended for fixed physical resources, thereby incapable of supporting cases where resources allocated to the host OS/guest OS are represented in logical terms (for example, a virtual network interface name connected to a bridge). In Patent Document 2, on the other hand, an agent is deployed in a respective host OS or guest OS to detect a failure and notify it to a manager, so that system switching is controlled based on thresholds managed by the manager. However, this configuration has not solved the above problems, and the need to deploy an agent function in every host OS/guest OS presents a problem in terms of processing efficiency.

The present invention was made to solve, for example, the above-described problems, and provides a mechanism that allows mapping of physical resources used by a respective host OS/guest OS even if they are logical resources. It is another object to provide a mechanism that makes it possible for cluster software on another system to implement system switching by allowing only a management domain in a virtual environment to detect a failure or performance degradation in a physical resource, and, upon occurrence of a failure, immediately stopping the relevant guest OS or host OS according to the content of failure/performance degradation.

### Means to Solve the Problems

A server apparatus according to the present invention for implementing a plurality of virtual computers by using physical resources, the server apparatus implementing the plurality of virtual computers such that a physical resource used by each one of the plurality of virtual computers out of the physical resources is used as a logical resource, comprises:
an agent execution unit for detecting a fault in a physical resource,
wherein the agent execution unit includes:
   a resource mapping information generating unit for generating resource mapping information by mapping the logical resource to a physical resource of the server apparatus;
   a resource mapping storing unit for storing in a storage device the resource mapping information generated by the resource mapping information generating unit;
   a fault monitoring unit for collecting and storing in a storage device physical resource operating information indicating an operating condition of a physical resource;
   a fault determining unit for determining by a processing device whether or not the physical resource operating information collected by the fault monitoring unit contains information on a physical resource with a faulty operating condition and, in case that information on a physical resource with a faulty operating condition is contained, for identifying by a processing device a virtual computer using a logical resource mapped to the physical resource with a faulty operating condition based on the information on the physical resource with a faulty operating condition and the resource mapping information; and
   a fault notifying unit for notifying the virtual computer identified by the fault determining unit, according to the information on the physical resource with a faulty operating condition.

The resource mapping information generating unit periodically generates resource mapping information.

The server apparatus includes, for each one of the plurality of virtual computers, a virtual-computer-specific resource management file which contains virtual-computer-specific resource management information for mapping a logical resource used by the virtual computer to a physical resource; and
the resource mapping information generating unit obtains the virtual-computer-specific resource management information including a physical resource from the virtual-computer-specific resource management file, and, based on the virtual-computer-specific resource management information obtained, generates as the resource mapping information a resource mapping table by mapping a logical resource used by each one of the plurality of virtual computers to a physical resources of the server apparatus.

The server apparatus includes, for each resource type, a resource-type-specific management file which contains resource-type-specific management information for mapping a logical resource of the type to a physical resource of the type; and
the resource mapping information generating unit obtains the resource-type-specific management information from the resource-type-specific management file corresponding to the type of a logical resource used by each one of the plurality of virtual computers, and, based on the resource-type-specific management information obtained, generates the resource mapping information by mapping a logical resource used by each one of the plurality of virtual computers to a physical resource of the server apparatus.

The agent execution unit executes an agent program which is executed under an OS (operating system) of a virtual computer; and
the resource mapping information generating unit finds out a physical resource used by a logical resource by using a tool included in the OS of the virtual computer or using a command included in the agent program.

The agent execution unit further includes a fault determination threshold information storing unit for pre-storing in a storage device fault determination threshold information defining a threshold for determining whether or not an operating condition of a physical resource is faulty and fault notification information to be notified, in case that an operating condition of a physical resource is determined faulty based on the threshold, to a virtual computer using a logical resource mapped to the physical resource whose operating condition is determined faulty; and
the fault notifying unit performs notification based on the fault notification information defined in the fault determination threshold information.

Only one virtual computer among the plurality of virtual computers has the agent execution unit.

The resource mapping information generating unit obtains, by a processing device, a resource mapping file that has been previously created by mapping the logical resource to a physical resource of the server apparatus and stored in a storage device, and uses the resource mapping file obtained as the resource mapping information.

A fault detection method of a server apparatus according to the present invention, the server apparatus implementing a plurality of virtual computers by using physical resources and implementing the plurality of virtual computers such that a physical resource used by each one of the plurality of virtual computers out of the physical resources is used as a logical resource, the fault detection method of a server apparatus comprises:
an agent execution step of detecting a fault in a physical resource by an agent execution unit,
wherein the agent execution step includes:
   a resource mapping information generating step in which a resource mapping information generating unit generates resource mapping information by mapping the logical resource to a physical resource of the server apparatus;
   a resource mapping storing step in which a resource mapping storing unit stores in a storage device the resource mapping information generated by the resource mapping information generating step;
   a fault monitoring step in which a fault monitoring unit collects and stores in a storage device physical resource operating information indicating an operation condition of a physical resource;
   a fault determining step in which a fault determining unit determines by a processing device whether or not the physical resource operating information collected by the fault monitoring step contains any information on a physical resource with a faulty operating condition, and, in case that information on a physical resource with a faulty operating condition is contained, identifies by a processing device a virtual computer using a logical resource mapped to the physical resource with a faulty operating condition based on the information on the physical resource with a faulty operating condition and the resource mapping information; and
   a fault notifying step in which a fault notifying unit notifies the virtual computer identified by the fault determining step, according to the information on the physical resource with a faulty operating condition.

A fault detection program of a server apparatus according to the present invention causes a computer to execute the fault detection method of a server apparatus.

### Effect of the Invention

According to the present invention, an agent execution unit for detecting a fault in a physical resource comprises a resource mapping information generating unit for generating resource mapping information by mapping a logical resource to a physical resource of a server apparatus; a resource mapping storing unit for storing the resource mapping information in a storage device; a fault monitoring unit for collecting and storing in a storage device physical resource operating information indicating an operating condition of a physical resource; a fault determining unit for determining by a processing device whether or not the physical resource operating information contains any information on a physical resource with a faulty operating condition, and, in case that there is a faulty physical resource, for identifying by a processing device a virtual computer where a fault occurred based on the information on the physical resource with a faulty operating condition and the resource mapping information; and a fault notifying unit for notifying the virtual computer identified by the fault determining unit, according to the information on the physical resource with a faulty operating condition, so that it is possible to perform mapping between a logical resource used by each one of a plurality of virtual computers and a physical resource of the server apparatus, allowing an appropriate fault detection process to be performed.

### Preferred Embodiments for Carrying out the Invention

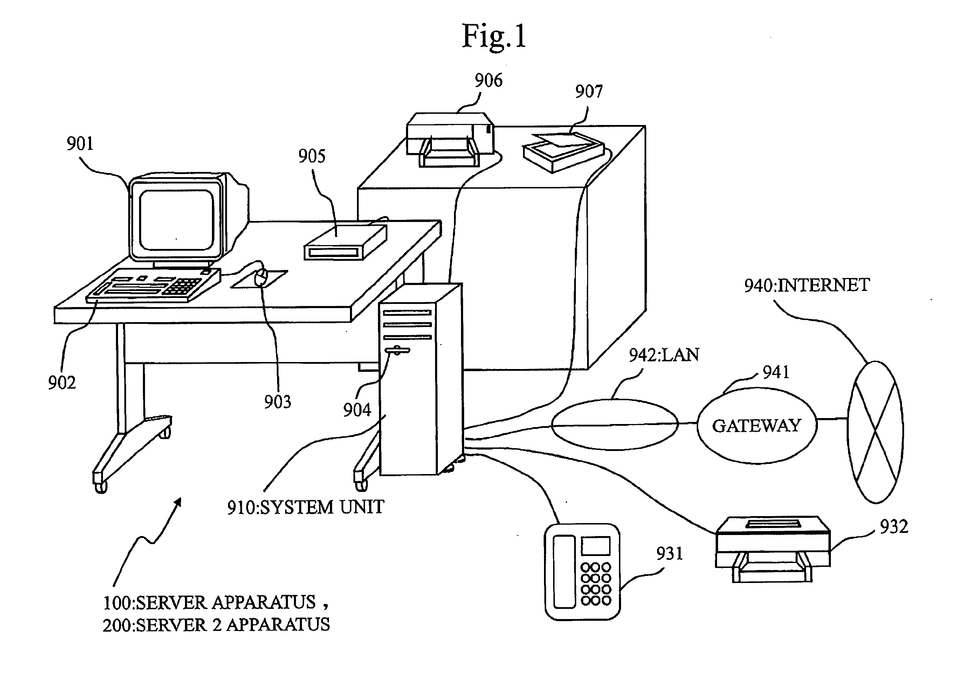

Fig. 1 shows an example of an appearance of a server apparatus 100 and a server 2 apparatus 200 according to a first embodiment. In Fig. 1, the server apparatus 100 and the server 2 apparatus 200 include hardware resources such as a system unit 910, a display device 901 having a display screen such as a CRT (cathode ray tube) or an LCD (liquid crystal display), a keyboard 902 (K/B), a mouse 903, an FDD 904 (flexible disk drive), a compact disk device 905 (CDD), a printer device 906, a scanner device 907, and these resource are connected via cables or signal lines.

The system unit 910 is a computer which is connected with a facsimile machine 932 and a telephone 931 via cables, and which is also connected to Internet 940 via a local area network 942 (LAN) and a gateway 941.

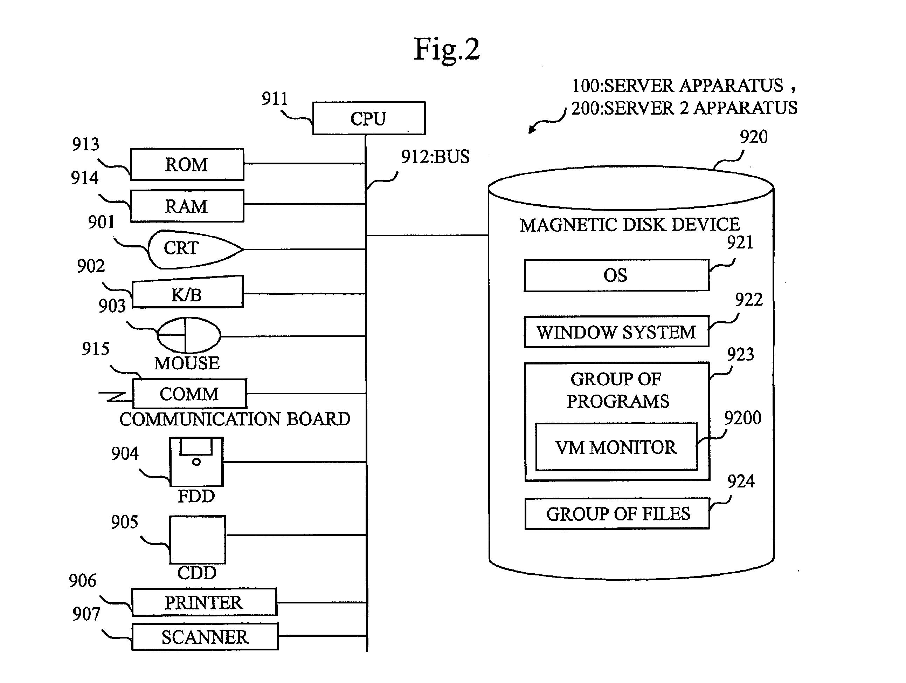

Fig. 2 shows an example of hardware resources of the server apparatus 100 and the server 2 apparatus 200 according to embodiments to be described hereinafter.

In Fig. 2, the server apparatus 100 and the server 2 apparatus 200 include a CPU 911 (also called a central processing unit, a processing unit, an arithmetic unit, a microprocessor, a microcomputer, or a processor). The CPU 911 is connected via a bus 912 with a ROM 913, a RAM 914, a communication board 915 (which is an example of a communication device, a transmission device, or a receiving device), the display device 901, the keyboard 902, the mouse 903, the FDD 904, the CDD 905, the printer device 906, the scanner device 907, and a magnetic disk device 920, and controls these hardware devices. The magnetic disk device 920 may be replaced by a storage device such as an optical disk device or a memory card read/write device.

The RAM 914 is an example of a volatile memory. The storage media including the ROM 913, the FDD 904, the CDD 905, and the magnetic disk device 920 are examples of a non-volatile memory. These are examples of a storage device or a storage unit. The communication board 915, the keyboard 902, the scanner device 907, the FDD 904, and so on are examples of an input unit or an input device.

The communication board 915, the display device 901, the printer device 906, and so on are examples of an output unit or an output device.

The communication board 915 is, although not illustrated, connected to a facsimile, a telephone, a LAN, or the like. The communication board 915 may be connected to the Internet or a WAN (wide area network) such as ISDN, not being limited to the LAN.

In the magnetic disk device 920, a group of programs 923 including an operating system 921 (OS), a window system 922, a VM (virtual machine) monitor 9200 and a group of files 924 are stored. The programs in the group of programs 923 are executed by the CPU 911, the operating system 921, or the window system 922.

The group of programs 923 also includes, in addition to the VM monitor 9200, programs for implementing functions described as "unit" or "means" in the following descriptions of embodiments. The programs are read and executed by the CPU 911.

In the group of files 924, information, data, signal values, variables, and parameters described as results of determination, calculation, or process in the following descriptions of embodiments are stored as items such as "files", "databases", or "data". The "files", "databases", and "data" are stored in storage media such as disks or memories. The information, data, signal values, variables, and parameters stored in storage media such as disks or memories are read by the CPU 911 through a read/write circuit to a main memory or a cache memory, and are used by the CPU to perform operations such as extraction, search, reference, comparison, arithmetic operation, calculation, processing, output, printing, and display. While the CPU is performing operations such as extraction, search, reference, comparison, arithmetic operation, calculation, processing, output, printing, and display, the information, data, signal values, variables, and parameters are temporarily stored in a main memory, a cache memory, or a buffer memory.

In the flowcharts to be explained in the following descriptions of embodiments, an arrow generally indicates a data or signal input/output. Data and signal values are stored in storage media such as a memory of the RAM 914, a flexible disk of the FDD 904, a compact disk of the CDD 905, a magnetic disk of the magnetic disk device 920, or other types of storage media including optical disks, mini disks, and DVDs (digital versatile disks). Data and signals are transmitted online through the bus 912, a signal line, a cable, or other transmission medium.

In the following descriptions of embodiments, those described as "unit" maybe "circuit", "device", " equipment", or "means", and can also be "step", "procedure", or "process". That is, the "unit" may be implemented by firmware stored in the ROM 913. Alternatively, the "unit" may be implemented solely by software, or solely by hardware such as elements, devices, boards, or wiring, or a combination of software and hardware, or a combination further including firmware. Firmware and software are stored as programs in storage media such as magnetic disks, flexible disks, optical disks, compact disks, mini disks, and DVDs. The programs are read by the CPU 911 and executed by the CPU 911. That is, the programs cause a computer to function as the "unit" to be described later. Alternatively, the programs cause a computer to execute a procedure or a method related to the "unit" to be described later.

### First embodiment 1.

In this embodiment, the server apparatus 100 having an agent function for detecting a hardware fault will be described. Further, a redundant system 800 (a system-switching system) that redundantly comprises the server apparatus 100 and the server 2 apparatus 200 having the same configuration as the server apparatus 100 will be described.

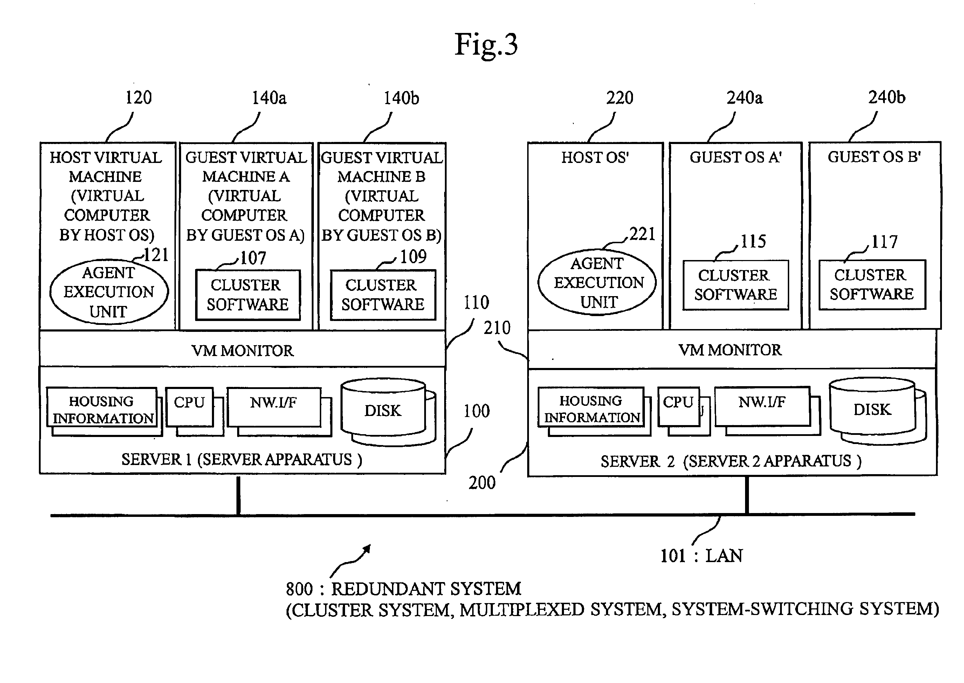

Fig. 3 shows a system block diagram of the redundant system 800 according to the first embodiment. Referring to Fig. 3, the system configuration of the redundant system 800 will be described. Two machines, the server apparatus 100 and the server 2 apparatus 200, are connected to the LAN (local area network) 101.

The server apparatus 100 according to the first embodiment implements a plurality of virtual computers (also called virtual machines) by employing hardware resources (hereinafter also called physical resources). The server apparatus 100 implements a plurality of virtual computers such that a physical resource used by each one of the plurality of virtual computers out of the physical resources of the server apparatus 100 is used as a logical resource.

As described above, the server apparatus 100 includes hardware resources (for example, a CPU, a disk (storage device), a network interface (NW. I/F), various housing hardware, and so on). Further, a VM (virtual machine) monitor 110 which is virtualization control software operates on an OS provided in the server apparatus 100.

The VM monitor 110 is software that centrally manages the hardware resources (hereinafter also called physical resources) of a computer. To the OS of the server apparatus 100, the VM monitor 110 is software that acts as a virtual computer called a virtual machine (also called a virtual computer or a domain) that is implemented using resources made up of a combination of portions of the physical resources (hereinafter also called logical resources). The virtual machine is a machine (computer) that is implemented by a virtual OS. In other words, the virtual machine is implemented by a virtual OS using logical resources that are virtually allocated from the physical resources of the server apparatus 100. Thus, the server apparatus 100 according to the first embodiment is a server apparatus capable of acting as if a plurality of virtual machines (virtual computers) were operating by using the VM monitor 110 to implement a plurality of virtual OSes, while they are physically on the single server apparatus 100.

On the VM monitor 110 of the server apparatus 100, a host virtual machine 120 (which is an example of a virtual computer) for managing the VM monitor 110 and two guest virtual machines, namely a guest virtual machine A 140a and a guest virtual machine B 140b (which are examples of a virtual computer), are implemented in a virtual manner. The host virtual machine 120 is a virtual machine that is implemented by a host OS, and the host virtual machine 120 implemented by the host OS may hereinafter be called the host OS or the host domain. Likewise, the guest virtual machine A 140a is a virtual machine that is implemented by a guest OS A, and may hereinafter be called the guest OS A or the guest domain A. Likewise, the guest virtual machine B 140b is a virtual machine that is implemented by a guest OS B, and may hereinafter be called the guest OS B or the guest domain B. Further, the guest virtual machine A 140a and the guest virtual machine B 140b may collectively be called a guest virtual machine 140, and the guest OS A and the guest OS B may collectively be called the guest OS.

The host virtual machine 120 (the host virtual machine implemented by the host OS) has an agent execution unit 121 for detecting a fault or failure in a physical resource (hardware resource) of the server apparatus 100. The guest virtual machine A 140a includes off-the-shelf cluster software 107, and the guest virtual machine B 140b includes off-the-shelf cluster software 109. Cluster software is software that controls system switching (multiplexing) in a cluster system.

The server 2 apparatus 200 is configured in the same manner as the server apparatus 100. That is, on an OS of the server 2 apparatus 200, a VM monitor 210 which is virtualization control software is implemented. On the VM monitor 210, a host virtual machine' 220 (a virtual machine implemented by a host OS') for managing the VM monitor 210 and two guest virtual machines, namely a guest virtual machine A' 240a (a virtual machine implemented by a guest OS A') and a guest virtual machine B' 240b (a virtual machine implemented by a guest OS B') are operating. The host virtual machine' 220 has an agent execution unit 221 for detecting a fault or failure in a physical resource of the server 2 apparatus 200. The guest virtual machine A' 240a includes off the-shelf cluster software 115, and the guest virtual machine B' 240b includes off-the-shelf cluster software 117.

The redundant system 800 redundantly comprising the server apparatus 100 and the server 2 apparatus 200 having the same configuration as the server apparatus 100 provides a cluster system (also called a multiplexed system or a system-switching system), in which if the active server (the server apparatus 100) becomes inoperative due to a failure, performance degradation, and so on, the systems are switched so that the standby server (the server 2 apparatus 200) takes over the processing.

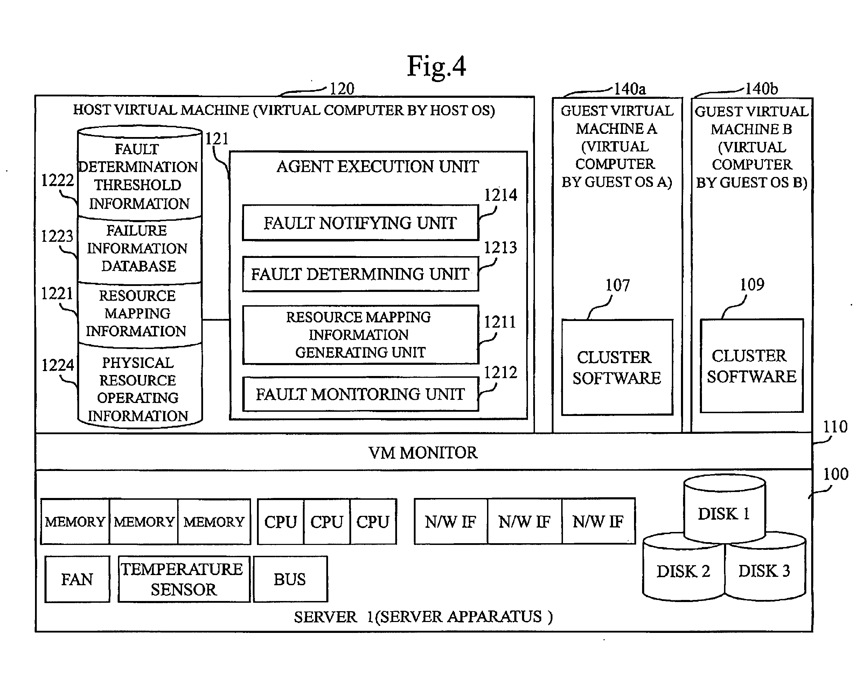

Fig. 4 is a block diagram showing a configuration of functional blocks of the agent execution unit 121 provided in the server apparatus 100 according to the first embodiment. Unless specified otherwise, it is intended that the agent execution unit 221 provided in the server 2 apparatus 200 is configured in the same manner.

In the server apparatus 100, the agent execution unit 121 is provided only in the host virtual machine 120. Likewise in the server 2 apparatus 200, the agent execution unit 221 is provided only in the host virtual machine' 220.

The agent execution unit 121 includes a resource mapping information generating unit 1211, a fault monitoring unit 1212, a fault determining unit 1213, and a fault notifying unit 1214. The agent execution unit 121 causes a resource mapping information storing unit (not illustrated) to store resource mapping information 1221 in a storage device, and causes a fault determination threshold information storing unit (not illustrated) to store fault determination threshold information 1222 in a storage device. The agent execution unit 121 also causes a storage unit (not illustrated) to store a fault information database 1223 and physical resource operating information 1224 in a storage device.

The resource mapping information generating unit 1211 generates the resource mapping information 1221 by mapping a logical resource used by each one of the virtual machines (the host virtual machine 120, the guest virtual machine A 140a, the guest virtual machine B 140b) implemented on the server apparatus 100 to a physical resource of the server apparatus 100. The resource mapping information generating unit 1211 generates the resource mapping information 1221 by mapping a resource used by each virtual machine (each domain) to an actual physical resource. The resource mapping information 1221 generated by the resource mapping information generating unit 1211 is stored in a storage device by the resource mapping information storing unit. The resource mapping information generating process of the resource mapping information generating unit 1211 will be described later.

The fault monitoring unit 1212 collects and stores in a storage device the physical resource operating information 1224 indicating the operating condition of a physical resource. That is, the fault monitoring unit 1212 collects information such as a hardware failure in a CPU, a disk, a network interface (NW. I/F), and so on and disk response performance of the server apparatus 100 on which the agent execution unit 121 is operating, and stores in a storage device the collected information as the physical resource operating information 1224. Further, the fault monitoring unit 1212 monitors the conditions of a server housing temperature, a power supply, a fan, a bus, and so on through the IPMI (Intelligent Platform Management Interface), collects information on these conditions, and stores the information in a storage device as the physical resource operating information 1224. The IPMI is a standard interface specification for operating systems, for example, for monitoring, recovering, and remotely controlling the conditions (such as a temperature, a voltage, a fan, and a bus) of a server platform of the server apparatus 100.

The fault determination threshold information 1222 is pre-stored in a storage device by the fault determination threshold information storing unit. The fault determination threshold information 1222 defines a threshold for determining a fault in the operating condition of a physical resource and fault notification information to be notified, upon determination of a fault in the operating condition of a physical resource based on the threshold, to a virtual machine (virtual computer) using a logical resource mapped to the physical resource whose operating condition is determined faulty The fault determination threshold information 1222 will be described in detail later.

The fault determining unit 1213 determines by a processing device whether or not the physical resource operating information 1224 collected by the fault monitoring unit 1212 contains any information on a physical resource with a faulty operating condition. Based on the fault determination threshold information 1222, the fault determining unit 1213 determines whether or not the physical resource operating information 1224 contains any information on a physical resource with a faulty operating condition. That is, based on the fault determination threshold information 1222, the fault determining unit 1213 determines whether or not the physical resource operating information 1224 (monitored information) collected by the fault monitoring unit 1212 constitutes a fault to be notified. If the fault determining unit 1213 determines that the physical resource operating information 1224 contains information on a physical resource with a faulty operating condition, a virtual machine (virtual computer) using a logical resource mapped to the physical resource with a faulty operating condition is identified by a processing device based on the information on the physical resource with a faulty operating condition and the resource mapping information 1221.

The fault notifying unit 1214 notifies the virtual machine identified as the virtual machine using the logical resource mapped to the physical resource with a faulty operating condition (hereinafter called the failed virtual machine), according to the information on the physical resource with a faulty operating condition. The fault notifying unit 1214 performs notification according to the failure information of the physical resource with a faulty operating condition based on fault notification information 1114 defined in the fault determination threshold information 1222 to be described later. If the physical resource operating information 1224 (monitored information) is determined faulty by the fault determining unit 1213, the fault notifying unit 1214 records the failure information on the physical resource determined faulty in the failure information database 1223, stores it in a storage device, and notifies the failed virtual machine (the host virtual machine 120 or the guest virtual machine A 140a or the guest virtual machine B 140b) identified by the fault determining unit 1213, according to the failure information based on the fault notification information 1114.

One characteristic of this embodiment is that the agent execution unit 121 generates the resource mapping information 1221. Another characteristic is that the agent execution unit 121 is provided only in the host virtual machine 120. Although the agent execution unit 121 is provided only in the host virtual machine 120, the resource mapping information 1221 allows management of logical resources of other virtual machines implemented on the server apparatus 100, so that a failed virtual machine can be properly identified. Because the agent execution unit 121 is required only in the host virtual machine 120, the processing efficiency of the agent function of the server apparatus 100 can be improved.

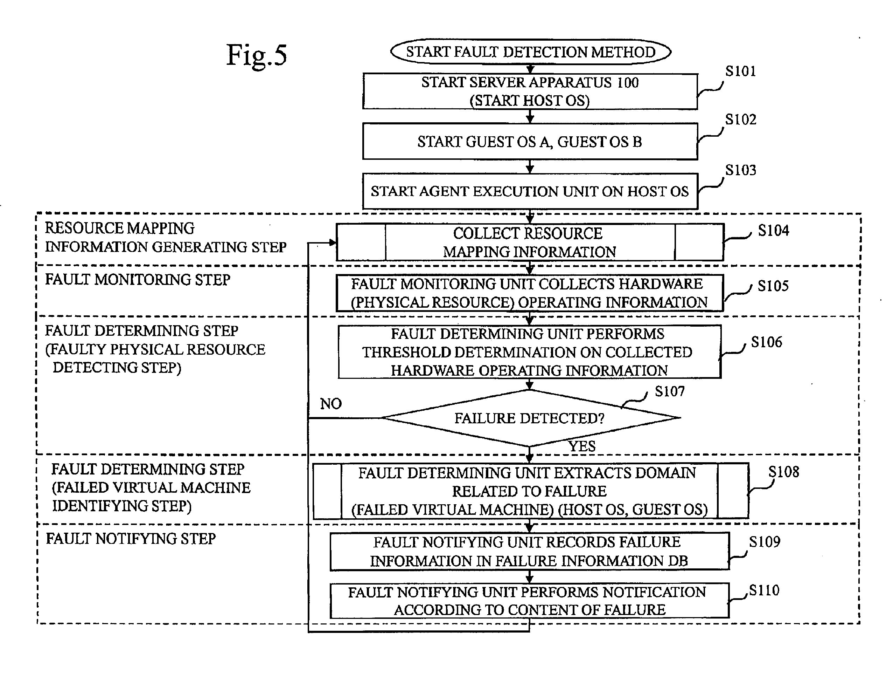

Fig. 5 is a flowchart showing the processing operations of a fault detection method of the server apparatus 100 according to the first embodiment. Referring to Fig. 5, a fault detection method (a fault detection program) of the server apparatus 100 according to the first embodiment will be described. The OS (the OS of the server apparatus 100), the host OS, the guest OS, and the agent execution unit 121 to be described below execute each process to be described below by utilizing hardware resources such as a CPU and a storage device.

First, when the server apparatus 100 is activated by a user or automatically, the CPU loads and executes the host OS, so that the host virtual machine 120 starts up (S101). Then, the CPU of the server apparatus 100 loads and executes the guest OS A and the guest OS B, so that the guest virtual machine A 140a and the guest virtual machine B 140b start up (S102). On each guest OS of each guest virtual machine, off-the-shelf cluster software starts operating by being loaded and executed by the CPU, so that a redundant configuration is formed between the guest OS A and the guest OS A' of the server 2 apparatus 200 and between the guest OS B and the guest OS B' of the server 2 apparatus 200, respectively.

Next, the agent execution unit 121 is started by the CPU on the host OS of the host virtual machine 120 (S103). The agent execution unit 121 causes the CPU to execute an agent program that runs under the host OS of the host virtual machine 120. The agent program is executed by the CPU as a program always running on the host OS (a resident program).

### <S104: Resource mapping information generating step>

Using the CPU, the resource mapping information generating unit 1211 obtains the resource mapping information between the logical resources used by the host virtual machine 120, the guest virtual machine A 140a, and the guest virtual machine B 140b and the physical resources of the server apparatus 100, so as to generate the resource mapping information 1221 (S104). The server apparatus 100 includes in a storage device, for example, a virtual-computer-specific resource management file which contains virtual-computer-specific resource management information for mapping a logical resource used by each virtual machine to a physical resource. The resource mapping information generating unit 1211 obtains the virtual-computer-specific resource management information including a physical resource from the virtual-computer-specific resource management file, and uses the obtained virtual-computer-specific resource management information to generate as the resource mapping information 1221 a resource mapping table by mapping a logical resource used by each virtual machine to a physical resource of the server apparatus 100. Further, the server apparatus 100 includes in a storage device, for example, a resource-type-specific management file for each resource type containing resource-type-specific management information for mapping a logical resource of the type to a physical resource of the type. The resource mapping information generating unit 1211 obtains the resource-type-specific management information from the resource-type-specific management file corresponding to the type of a logical resource used by each virtual machine, and uses the obtained resource-type-specific management information to generate the resource mapping information 1221 by mapping a logical resource used by each virtual machine to a physical resource of the server apparatus 100.

As described above, using the CPU, the resource mapping information generating unit 1221 finds out the physical resource being used by a logical resource of each virtual machine by using a tool or a command included in the OS of the virtual machine or by using a tool or a command included in the agent program, so as to generate the resource mapping information 1221. The resource mapping information storing unit stores (saves) the generated resource mapping information 1221 in a storage device.

Using the CPU, the resource mapping information generating unit 1211 periodically collects and generates the resource mapping information 1221, and the resource mapping storing unit stores and updates the resource mapping information 1221 in a storage device. That is, the resource mapping information 1221 is updated periodically. In this way, the resource mapping information generating and storing processes are executed periodically using the CPU. Alternatively, the resource mapping information generating and storing processes may be implemented as the first processes to be executed when the agent execution unit 121 is activated and starts processing. In this case, activating the agent execution unit 121 periodically automatically ensures that the resource mapping information generating and storing processes are also executed periodically. Alternatively, the resource mapping information generating unit 1211 may be executed independently of the processes of the agent execution unit 121. The resource mapping information generating method of the resource mapping information generating unit 1211 will be described in detail later.

### <S105: Fault monitoring step>

Using the CPU, the fault monitoring unit 1212 periodically monitors the hardware (physical resources) and collects the physical resource operating information 1224 indicating the operating conditions of the hardware (physical resources). The fault monitoring unit 1212 stores the collected physical resource operating information 1224 in a storage device (S105). The physical resource operating information 1224 includes, for example, the housing-related information (power supply information, CPU temperature, bus information, fun operating information, and so on) through the IPMI described above, read/write errors and response performance of hard disks, and response performance of the network interface (NW. I/F). Using the CPU, the fault monitoring unit 1212 notifies the fault determining unit 1213 that the physical resource operating information 1224 has been collected.

### <S 106 to S 108: Fault determining step>

### <S106 to S 107: Faulty physical resource detecting step>

Using the CPU, the fault determining unit 1213 determines whether or not the physical resource operating information 1224 collected by the fault monitoring unit 1212 contains any information on a physical resource with a faulty operating condition. Upon receiving a notification from the fault monitoring unit 1212 that the physical resource operating information 1224 has been collected, the fault determining unit 1213 determines whether or not the collected physical resource operating information 1224 contains any fault (failure) (S106). Using the CPU, the fault determining unit 1213 determines whether or not there is a failure or fault based on the information defined by the fault determination threshold information 1222 (fault determination threshold information database) pre-stored in a storage device by the fault determination threshold information storing unit (S 107).

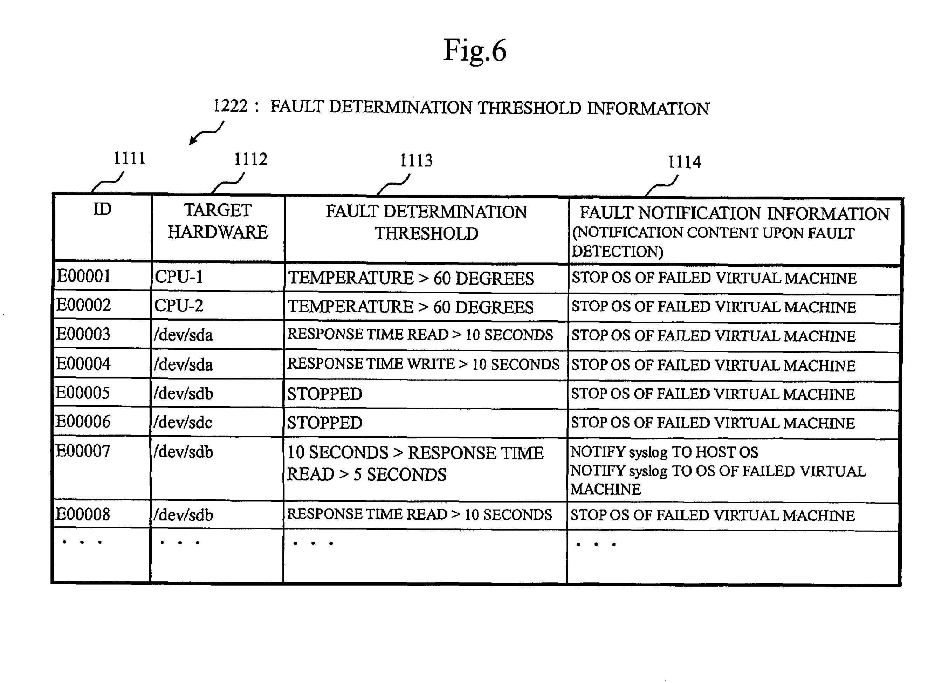

Fig. 6 shows a table configuration of the fault determination threshold information 1222. Referring to Fig. 6, specific examples of the fault determination process of the fault determining unit 1213 will be described.

The fault determination threshold information 1222 comprises an ID 1111 for setting an identifier for identifying a faulty physical resource operating condition; target hardware 1112 for setting target hardware (physical resource) of a faulty operating condition; a fault determination threshold 1113 for setting a threshold for determining a faulty operating condition; and fault notification information 1114 for setting the content of notification to a failed virtual machine (failed virtual OS) if a faulty operation condition is determined, the failed virtual machine being identified by a process of identifying a virtual machine where a fault has been detected (failed virtual machine identifying process) to be described later.

For example, in Fig. 6, the information having "E00001" as the ID 1111 of the faulty physical resource operating condition is information for determining a fault in CPU-1 if its temperature exceeds 60 degrees, in which case the fault notification information 1114 "Stop OS" is to be notified to a virtual machine identified as using CPU-1 as a resource (logical resource). For example, the information having "E00003" as the ID 1111 is information for identifying a fault in hard disk "/dev/sda/" if its read response time (response time READ) exceeds 10 seconds, in which case the fault notification information 1114 "Stop OS" is to be notified to a virtual machine identified as using the hard disk "/dev/sda/" as a logical resource.

Returning to Fig. 5, using the CPU, the fault determining unit 1213 determines whether or not the physical resource operating information 1224 contains any information on a physical resource with a faulty operating condition by comparing each operating information indicating the operating condition of each physical resource included in the physical resource operating information 1224 against each faulty physical resource operating condition (namely, information on each ID) defined in the fault determination threshold information 1222.

For example, suppose that, in the fault determining unit 1213, the physical resource operating information 1224 stored in a storage device contains the information "CPU-1 temperature: 63 degrees". Using the CPU, the fault determining unit 1213 references the fault determination threshold information 1222 and determines a fault in the physical resource "CPU-1" based on the information for when the ID 1111 is "E00001" which defines that a fault is determined in CPU-1 if its temperature exceeds 60 degrees. As another example, upon finding the information "hard disk "/dev/sda" read response time: 20 seconds" among the collected physical resource operating information 1224 (hardware operating information), the fault determining unit 1213 recognizes, by using the CPU, a fault (failure) in the hard disk "/dev/sda" based on the fault determination threshold information 1222 for when the ID 1111 is "E00003" which defines that a fault is determined if the read response time exceeds 10 seconds.

### <S108: Failed virtual machine identifying step>

If the fault determining unit 1213 finds no fault (failure) in the physical resources (NO at S107), the agent execution unit 121 returns processing to the resource mapping information generating step at S104.

If the fault determining unit 1213 finds a fault (failure) in any of the physical resources (YES at S107), the fault determining unit 1213 extracts (identifies), by using the CPU, a virtual machine (host OS/guest OS) related to the physical resource where the fault (failure) has been detected based on the resource mapping information 1221 (S108). That is, the fault determining unit 1213 identifies a virtual machine that is using the physical resource with a faulty operating condition (called a failed virtual machine (a failed domain) hereinafter) as a logical resource. There can be one failed virtual machine or a plurality of failed virtual machines if the target physical resource is shared among a plurality of virtual machines. Using the CPU, the fault determining unit 1213 outputs to the fault notifying unit 1214 the ID 1111 of the faulty physical resource operating condition detected at S106 and the information on the failed virtual machine(s) identified at S108. Alternatively, using the CPU, the fault determining unit 1213 outputs to the fault notifying unit 1214 the fault notification information 1114 corresponding to the ID 1111 of the faulty physical resource operating condition detected at S106 and the information on the failed virtual machine(s) identified at S108. The failed virtual machine identifying step at S108 will be described in detail later.

### <S109 and S 110: Fault notifying step>

When the fault determining unit 1213 identifies (extracts) the failed virtual machine(s) (failed domain(s)), the fault notifying unit 1214 stores, by using the CPU and in a storage device, the information on the failed virtual machine(s) by relating it to the fault condition of the physical resource where the fault (failure) has occurred as the failure information database 1223 (S109).

Further, using the CPU, the fault notifying unit 1214 notifies the failed virtual machine(s) according to the content of the fault (failure) (S110). Using the CPU, the fault notifying unit 1214 obtains from the fault determination threshold information 1222 the content of the fault notification information 1114 corresponding to the ID 1111 of the faulty physical resource operating condition of the failed virtual machine(s). In other words, the fault notifying unit 1214 inputs the ID 1111 of the faulty physical resource operating condition from the fault determining unit 1213, and, based on the inputted ID 1111, obtains the fault notification information 1114 corresponding to the inputted ID 1111 from the fault determination threshold information 1222. Alternatively, the fault notifying unit 1214 obtains the fault notification information 1114 by direct input from the fault determining unit 1213. Using the CPU, the fault notifying unit 1214 notifies the content of the obtained fault notification information 1114 to the failed virtual machine(s).

For example, when the ID 1111 of the faulty physical resource operating condition related to the failed virtual machine(s) is "E00001", it is defined that the fault notifying unit 1214 notifies the fault notification information 1114 "Stop OS" to the failed virtual machine(s). Upon receiving the notification "Stop OS", each failed virtual machine stops its OS in accordance with the content of the notification. Depending on the type of failure, the failed virtual machine itself may not be able to stop the OS properly. In such a case, if the failed virtual machine is a host OS, for example, a kernel panic (OS panic) is generated to force the OS to stop. If the failed virtual machine is a guest OS, for example, the agent execution unit 121 uses a command of the VM monitor to force the failed guest OS to stop.

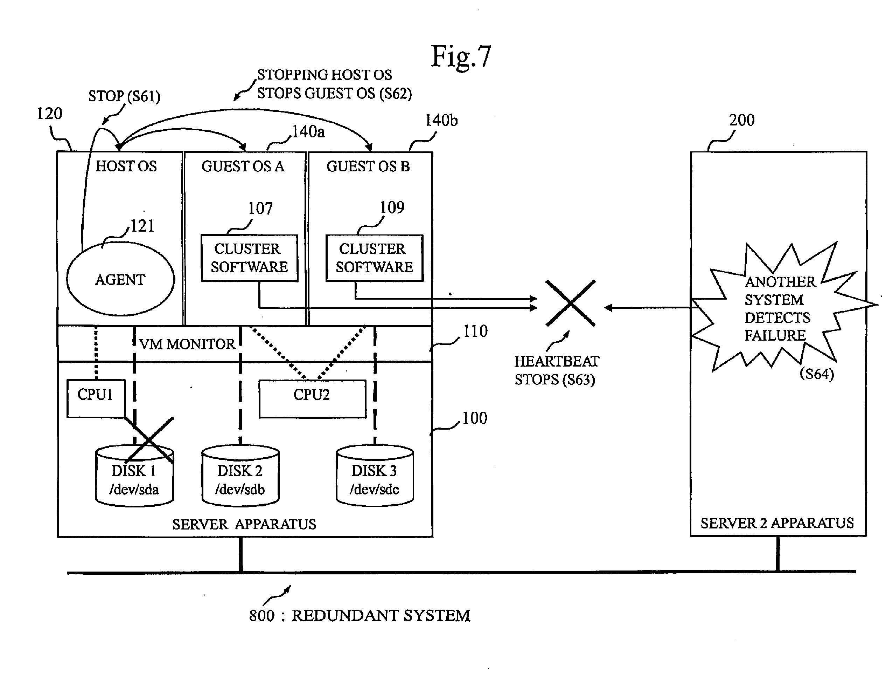

Fig. 7 shows an example of operation at system switching in the redundant system 800 according to the first embodiment. In Fig. 7, it is assumed that the hard disk "/dev/sda" used by the host OS of the host virtual machine 120 of the server apparatus 100 has failed and its response performance has exceeded 10 seconds. In this case, the fault determining unit 1213 determines, by the above-described process, a fault in the hard disk "/dev/sda" based on the ID 1111 of "E00003" in the fault determination threshold information 1222. The fault determining unit 1213 also identifies, by the above-described process, the host virtual machine 120 as the failed virtual machine. The fault notifying unit 1214 obtains, by the above-described process, the fault notification information 1114 "Stop OS" for the ID 1111 of "E00003" from the fault determination threshold information 1222, and notifies the host virtual machine 120. The host virtual machine 120 stops the host OS in accordance with the content of the received notification (S61). Stopping the host OS causes the guest virtual machine A 140a and the guest virtual machine B 140b implemented on the same server apparatus 100 to stop the guest OS A and the guest OS B, respectively (S62). This causes the cluster software 107 on the guest OS A and the cluster software 109 on the guest OS B to stop, thereby stopping the heartbeat being supplied to the server 2 apparatus 200 by the cluster software 107 and 109 (S63). In the redundant system 800 according to this embodiment, this stopping of the heartbeat allows the cluster software 115 and 117 of another system (a standby system) (the server 2 apparatus 200) to appropriately detect the fault and to perform appropriate system switching operations (S64).

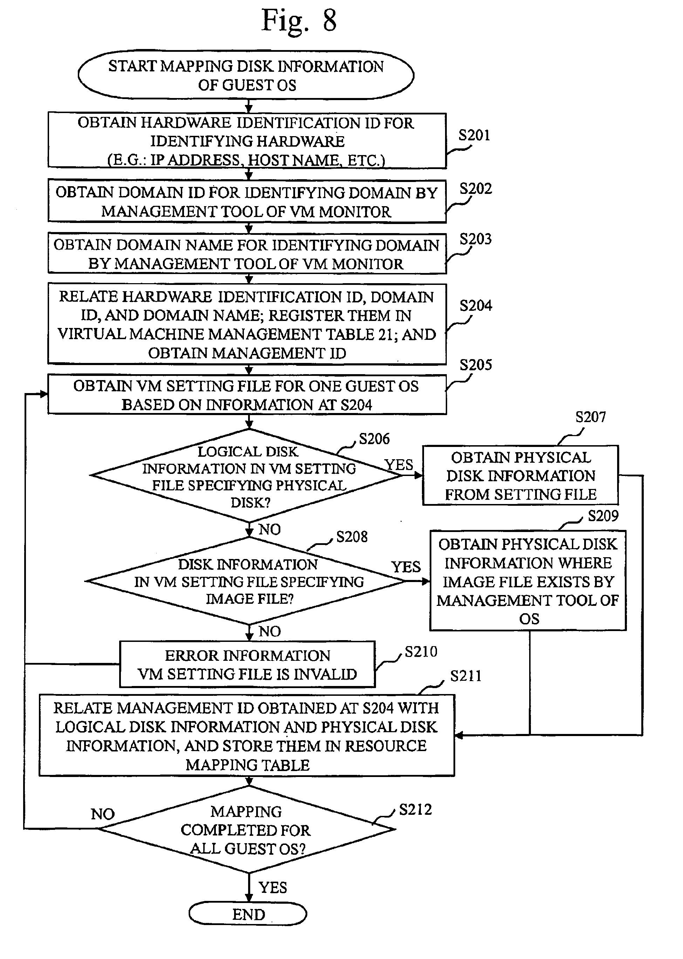

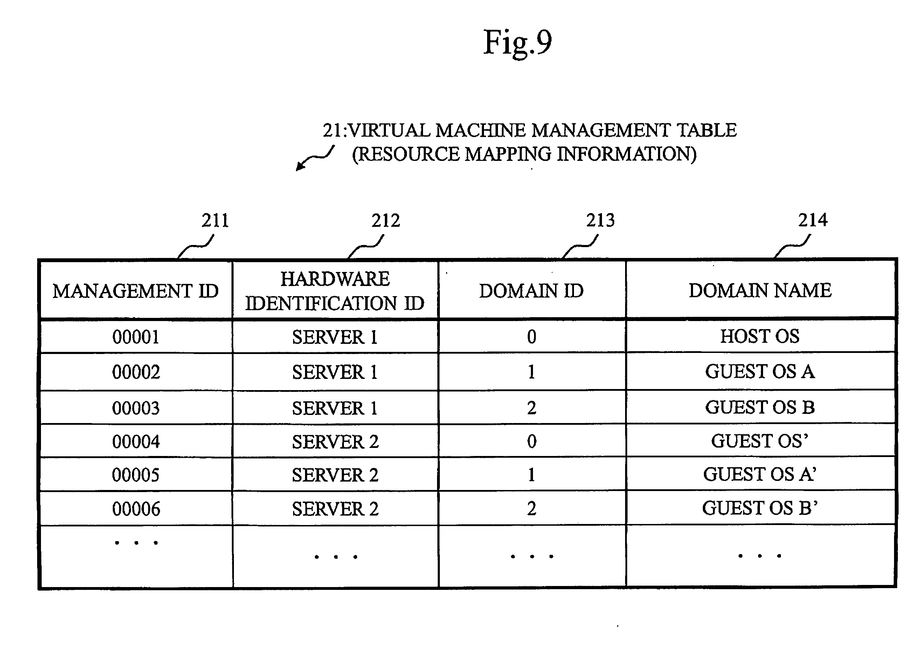

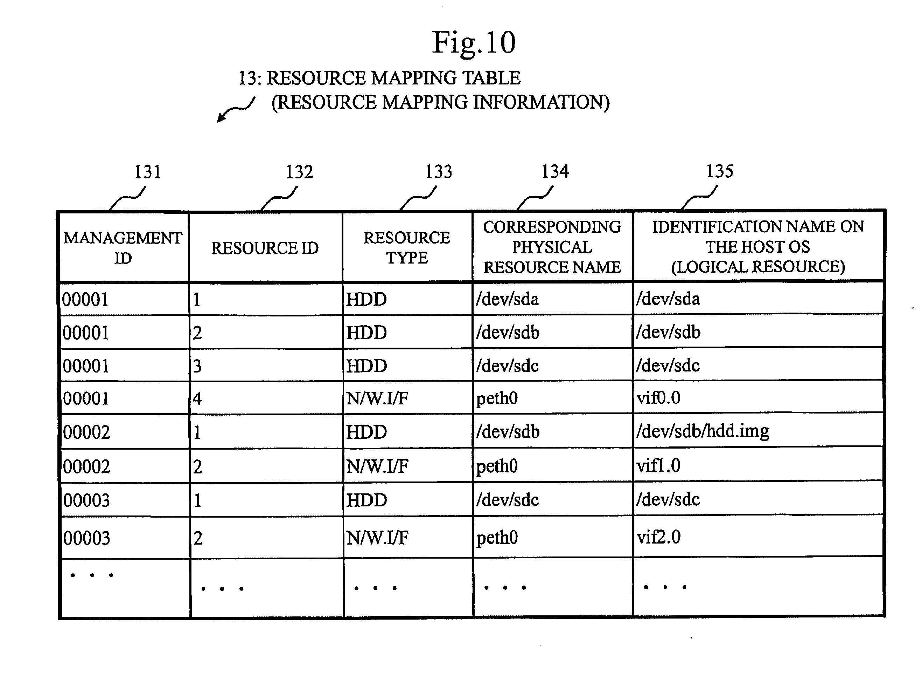

Fig. 8 is a flowchart showing a resource mapping information generating process between the disk information that can be recognized by the host OS of the host virtual machine on which the agent execution unit 121 is operating (here, disk information of the guest virtual machine 140) and the physical disk information actually used by the guest virtual machine. Fig. 9 shows a table configuration of a virtual machine management table 21 of resource mapping information. Fig. 10 shows a table configuration of a resource mapping table 13 of resource mapping information. Referring to Figs. 8 to 10, detailed operations will be described for the resource mapping information generating process by the resource mapping information generating unit 1211 of the agent execution unit 121.

The resource mapping information 1221 is made up of the virtual machine management table 21 and the resource mapping table 13 to be described below.

First, referring to Fig. 9, the virtual machine management table 21 of the resource mapping information will be described. In the virtual machine management table 21, the following are defined as one set of information (one record): a management ID 211 to be newly given, a hardware identification ID 212 for identifying a physical server in the redundant system 800, a domain ID 213 for identifying a virtual machine (a domain), and a domain name 214 for setting a domain name corresponding to the domain ID. In other words, the virtual machine management table 21 is a table for mapping a virtual machine to a physical server on which the virtual machine is implemented.

Next, referring to Fig. 10, the resource mapping table 13 of the resource mapping information will be described. The resource mapping table 13 is made up of a management ID 131 for setting the management ID 211 given in the virtual machine management table 21; a resource ID 132 to be sequentially given to the virtual machine's resource (logical resource) indicated by the management ID 131; a resource type 133 for setting a resource type; a corresponding physical resource name 134 for setting a corresponding physical resource of the server apparatus 100; and an identification name 135 on the host OS (a logical resource name) for setting a resource recognized on the host OS.

Referring to Fig. 8, it will be described how the resource mapping information generating unit 1211 generates, by using the CPU, the resource mapping information 1221 by setting information in the virtual machine management table 21 and the resource mapping table 13. Using the CPU, the resource mapping information generating unit 1211 reads a resource mapping information generating program from a storage device, and executes the resource mapping information generating program.

Referring to Fig. 8, a method will be described for mapping the disk information of the guest OS of the guest virtual machine 140 (hereinafter called logical disk information) and the physical disk information being used by the guest OS (physical disk information).

### <Resource mapping information generating process between the guest OS disk information and the physical disk information>

It is assumed that the resource mapping information generating unit 1211 uses a server name (host name), an IP address, or the like as the hardware identification ID 212 for identifying a server (hardware). First, the resource mapping information generating unit 1211 obtains the server name "server 1 (the server apparatus 100)" of the server on which it is operating as the hardware identification ID 212 (S201). Next, the resource mapping information generating unit 1211 obtains the domain ID 213 for identifying each virtual machine (each domain) implemented on the server apparatus 100 and the domain name 214 for identifying each virtual machine by using a management tool of the VM monitor of the server apparatus 100 (S202, S203).

For example, suppose that the resource mapping information generating unit 1211 obtains the information that the domain ID "0" is related to the domain name "host OS". The resource mapping information generating unit 1211 adds (obtains) a new management ID 211 and registers it in the virtual machine management table 21 of the resource mapping information 1221 by relating it with the obtained hardware identification ID 212, domain ID 213, and domain name 214. The resource mapping information generating unit 1211 sets the newly given (obtained) management ID "00001" in the virtual machine management table 21 by relating it with the hardware identification ID "server 1 (the server apparatus 100)", the domain ID "0", and the domain name "host OS" (See Fig. 9).

Next, suppose that the resource mapping information generating unit 1211 obtains, for example, the information that the domain ID "1" is related to the domain name "guest OS A". The resource mapping information generating unit 1211 adds (obtains) a new management ID 211 and registers it in the virtual machine management table 21 of the resource mapping information 1221 by relating it with the obtained hardware identification ID 212, domain ID 213 and domain name 214. The resource mapping information generating unit 1211 sets the newly given (obtained) management ID "00002" in the virtual machine management table 21 by relating it with the hardware identification ID "server 1 (the server apparatus 100)", the domain ID "1", and the domain name "guest OS A" (see Fig. 9). That is, the resource mapping information generating unit 1211 sets "00002" as the management ID 211, "server 1 (the server apparatus 100") as the hardware identification ID, "1" as the domain ID, and "guest OS A" as the domain name.

In this way, the resource mapping information generating unit 1211 sequentially sets information for mapping each virtual machine implemented on the server apparatus 100 to a physical server in the virtual machine management table 21 for all the virtual machines implemented on the server apparatus 100 (S204). If the same information has already been set in the virtual machine management table 21, the resource mapping information generating unit 1211 uses that information to obtain the management ID.

The resource mapping information generating unit 1211 obtains the management ID 211 of one guest OS from the obtained virtual machine management table 21 registered at S204. Based on the information obtained with this management ID 211 (the hardware identification ID 212, the domain ID 213, the domain name 214), the resource mapping information generating unit 1211 obtains the VM setting file (which is an example of a virtual-computer-specific resource management file which contains virtual-computer-specific resource management information) for the guest OS of the corresponding guest virtual machine (S205).

The resource mapping information generating unit 1211 obtains, from the obtained VM setting file for the guest OS, the disk information being used by the target guest OS (logical disk information) (which is an example of the above-described virtual-computer-specific resource management information including a physical resource), and, using the CPU, determines whether or not the obtained disk information is physical disk information (S206). If the disk information being used by the target guest OS is described in physical terms, for example, the resource mapping information generating unit 1211 determines it as physical disk information.

If the obtained disk information is physical disk information (YES at S206), the resource mapping information generation unit 1211 obtains the obtained disk information directly as the information to be set as the corresponding physical resource name 134 in the resource mapping table 13 (S207). If the obtained disk information is not physical disk information (NO at S206), the resource mapping information generating unit 1211 proceeds to S208. At S208, using the CPU, the resource mapping information generating unit 1211 determines whether or not the obtained disk information that is not physical disk information is specified by an image file (image data) (S208).

If the obtained disk information is specified by an image file (YES at S208), the resource mapping information generating unit 1211 uses an OS management tool such as the df command to obtain the physical disk information where the image file is located. The resource mapping information generating unit 1211 obtains the obtained physical disk information as the physical disk information being used by the guest OS (S209). If the obtained disk information is neither physical disk information nor specified by an image file (NO at S208), the resource mapping information generating unit 1211 outputs error information and returns to processing at S205 to check the VM setting file for the guest OS of the next virtual machine 140 (S210).

If an invalid condition, such as no disk information in the VM setting file, occurs at S206, for example, the resource mapping information generating unit 1211 also outputs error information and returns to processing at S205 to check the VM setting file for the guest OS of the next virtual machine 140.

At S211, the resource mapping information generating unit 1211 sets the resource mapping table 13 as follows: the management ID 211 obtained at S205 is set as the management ID 131; the ID given, for example, sequentially to the target resource of the guest virtual machine 140 is set as the resource ID 132; "HDD" indicating the resource type of the disk information is set as the resource type 133; the disk information being used by the target guest OS (logical disk information) obtained at S206 is set as the identification name 135 on the host OS; and the physical disk information obtained at S207 or S209 is set as the corresponding physical resource name 134. The resource ID 132 is an ID that is given arbitrarily so that each one of the resources managed with the same management ID can be uniquely identified. In this way, the resource mapping information generating unit 1211 registers the resource mapping table 13 in association with the management ID 211 of the virtual machine management table 21 obtained at S205.

At S212, the resource mapping information generating unit 1211 repeats the above steps (S205 to S212) until the resource mapping information generating process is completed for all the guest virtual machines 140 on the server apparatus 100 on which the unit itself is operating.

This will be described below using a specific example. For example, suppose that the resource mapping information generating unit 1211 obtains the management ID 211 of "00002" at S205. Since the management ID 211 of "00002" is related to the "guest OS A", the resource mapping information generating unit 1211 obtains the VM setting file for the guest OS A at S205. The resource mapping information generating unit 1211 obtains disk information from the obtained VM setting file for the guest OS A. It is assumed here that the disk information of the guest OS A is image data "/dev/sdb/hdd.img". The resource mapping information generating unit 1211 performs processing at S206 to S208, determines that the disk information is image data, and obtains the physical disk information "/dev/sdb" where the image file is located by using the OS management tool such as the df command (S209). Then, at S211, the resource mapping information generating unit 1211 sets the resource mapping table 13 as follows: the management ID 211 "00002" obtained at S204 is set as the management ID 131; the ID "1" given to the resource of the guest OS A is set as the resource ID 132; "HDD" indicating the resource type of the disk information is set as the resource type 133; the disk information "/dev/sdb/hdd.img" of the guest OS A obtained as S206 is set as the identification name 135 on the host OS; and the physical disk information "/dev/sdb" obtained at S209 is set as the corresponding physical resource name 134.

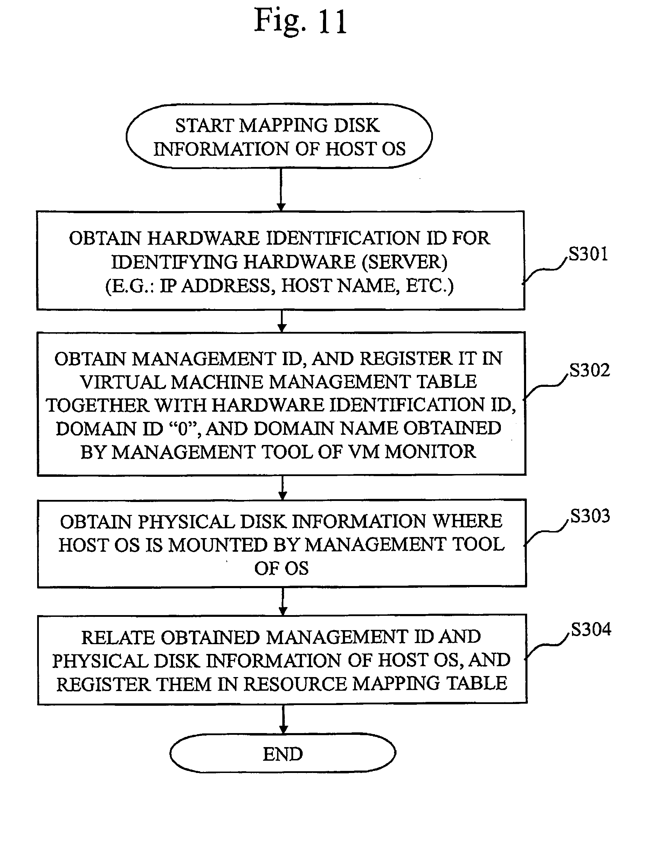

Fig. 11 is a flowchart showing a resource mapping information generating process between the disk information of the host OS of the host virtual machine 120 (logical disk information) and the physical disk information being used by the host OS (physical disk information) according to the first embodiment. Referring to Fig. 11, a method will be described for mapping the host OS of the host virtual machine 120 and the physical disk information being used by the host OS (physical disk information).

### <Resource mapping information generating process between the disk information of the host OS and the physical disk information>

It is assumed that the resource mapping information generating unit 1211 uses a server name (host name), an IP address, or the like as the hardware identification ID 212 for identifying a server (hardware). First, the resource mapping information generating unit 1211 obtains the server name "server 1 (the server apparatus 100)" of the server on which it is operating as the hardware identification ID 212 (S301). Next, the resource mapping information generating unit 1211 obtains the domain ID 213 for identifying each virtual machine (each domain) implemented on the server apparatus 100 and the domain name 214 for identifying each virtual machine (each domain) by using the management tool on the VM monitor of the server apparatus 100 (S302). Suppose, for example, that the resource mapping information generating unit 1211 obtains the information that the domain ID "0" is related to the domain name "host OS" in the host virtual machine 120 implemented on the server apparatus 100. The resource mapping information generating unit 1211 obtains and adds a new management ID 211 and registers it in the virtual machine management table 21 of the resource mapping information 1221 by relating it with the obtained hardware identification ID 212, domain ID 213 and domain name 214. The resource mapping information generating unit 1211 sets the newly given management ID "00001" in the virtual machine management table 21 by relating it with the hardware identification ID "server 1 (the server apparatus 100)", the domain ID "0", and the domain name "host OS" (see Fig. 9). In this way, the resource mapping information generating unit 1211 sequentially sets information for mapping each virtual machine implemented on the server apparatus 100 to a physical resource in the virtual machine management table 21 for all the virtual machines implemented on the server apparatus 100 (S302). If the same information has already been set in the virtual machine management table 21, the resource mapping information generating unit 1211 uses that information to obtain the management ID.

The resource mapping information generating unit 1211 obtains the management ID 211 of the host OS from the virtual machine management table 21 registered at S304. Suppose that at S303 the resource mapping information generating unit 1211 obtains "00001" as the management ID 211 of the host OS. The resource mapping information generating unit 1211 obtains the physical disk information where the host OS of the host virtual machine 120 is mounted (for example, "/dev/sda") by using the management tool of the OS (S303). The resource mapping information generating unit 1211 relates the management ID "00001" obtained at S303 with the physical disk information ("/dev/sda") obtained at S303 and stores them in the resource mapping table 13 (S304). That is, at S304, the resource mapping information generating unit 1211 sets the resource mapping table 13 as follows: the management ID 211 "00001" is set as the management ID 131; the ID "1" given to the resource of the host OS is set as the resource ID 132; "HDD" indicating the resource type of the disk information is set as the resource type 133; the physical disk information where the host OS is mounted, "/dev/sda", is set as the identification name 135 on the host OS; and the physical disk information where the host OS is mounted, "/dev/sda", is set as the corresponding physical resource name 134. Thus, the logical disk information that the host OS can recognize as the disk information is represented by physical disk information.

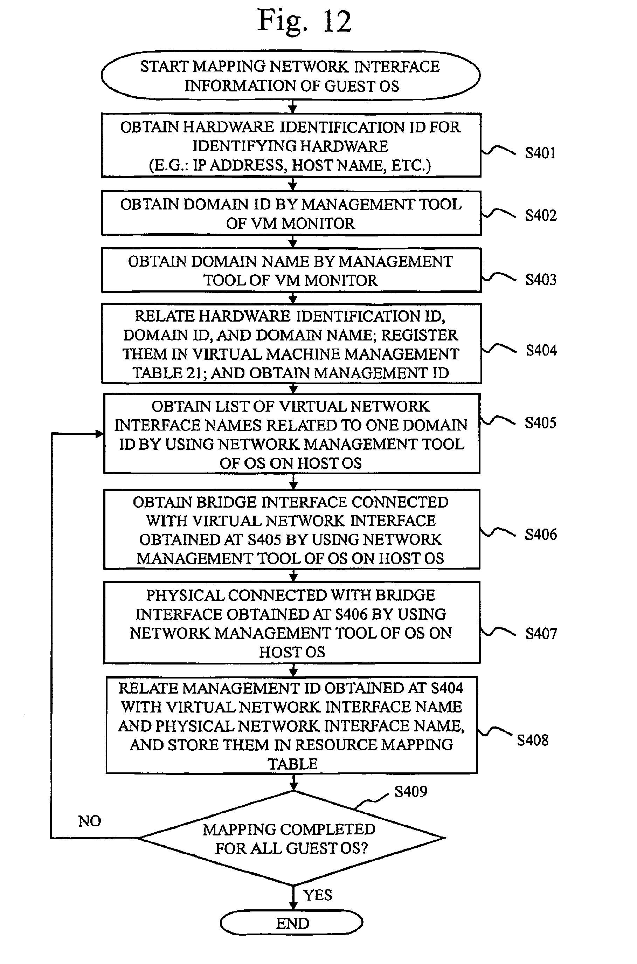

Fig. 12 is a flowchart showing a resource mapping information generating process regarding the network interface information of a guest virtual machine according to the first embodiment. Referring to Fig. 12, a method will be described for mapping a guest OS and the physical network interface information being used by the guest OS.

### <Resource mapping information generating process of the network interface information of the guest OS>

It is assumed that the resource mapping information generating unit 1211 registers the management ID 211, the hardware identification ID 212, the domain ID 213, and the domain name 214 in the virtual machine management table 21 by relating them to one another (S401 to S404). These steps are the same as S201 to S204 shown in Fig. 8 so that they are not described here.

The resource mapping information generating unit 1211 obtains the management ID 211 of one guest OS from the virtual machine management table 21 registered at S404. Using the CPU, the resource mapping information generating unit 1211 obtains a list of virtual network interfaces related to the domain ID for identifying a virtual machine (domain) indicated by the management ID obtained at S404 by utilizing a network management tool of the OS (the ifconfig command or the like) (which is an example of a tool included in the OS of the virtual computer or an example a command included in the agent program) on the host OS of the host virtual machine 120 (S405). The file to be managed by the ifconfig command or the like is an example of a resource-type-specific management file which contains resource-type-specific management information. For example, the resource mapping information generating unit 1211 obtains the virtual network interface name list "vif1.0" related to "guest OS A" of the domain ID "1" based on the management ID 211 "00002" obtained at S404. This is the virtual network interface name (logical resource) that is recognized by the guest OS A.

The resource mapping information generating unit 1211 obtains a bridge interface to which the virtual network interface name obtained at S405 is connected by using the network management tool of the OS (the brctl command or the like) (which is an example of a tool included in the OS of the virtual machine or an example of a command included in the agent program) on the host OS of the host virtual machine 120 (S406). For example, the resource mapping information generating unit 1211 obtains a bridge interface to which the virtual network interface name "vif1.0" is connected by using the network management tool of the OS (the brctl command or the like.).

The resource mapping information generating unit 1211 obtains a physical network interface name connected with the bridge interface obtained at S406 by using the network management tool of the OS on the host OS of the host virtual machine 120 (S407). For example, the resource mapping information generating unit 1211 can obtain the physical network interface name "peth0" connected with the bridge interface to which "vif1.0" obtained at S406 is connected.

At S408, the resource mapping information generating unit 1211 sets the resource mapping table 13 as follows: the management ID 211 obtained at S404 is set as the management ID 131; the ID given, for example, sequentially to the target resource of the guest virtual machine 140 is obtained and set as the resource ID 132; "N/W. I/F" indicating the resource type of the network interface information is set as the resource type 133; the virtual network interface name (logical resource) being used by the target guest OS obtained at S405 is set as the identification name 135 on the host OS; and the physical network interface name obtained at S407 is set as the corresponding physical resource name 134. The resource ID 132 is an ID that is given arbitrarily so that each one of the resources managed with the same ID can be uniquely identified. In this way, the resource mapping information generating unit 1211 registers the resource mapping table 13 in association with the management ID 211 of the virtual machine management table 21 obtained at S404 (S408). For example, the resource mapping information generating unit 1211 sets the resource mapping table 13 as follows: the management ID 211 "00002" obtained at S404 is set as the management ID 131; the ID "2" given to the resource of the guest OS A is set as the resource ID 132 ("1" is used for disk information resource); "N/W. I/F" indicating the resource type of the network interface information is set as the resource type 133; the virtual network interface name "vif1.0" being used by the target guest OS obtained at S405 is set as the identification name 135 on the host OS; and the physical network interface name "peth0" obtained at S407 is set as the corresponding physical resource name 134.

At S409, the resource mapping information generating unit 1211 repeats the above steps (S405 to S408) until the resource mapping information generating process of the network interface information is completed for all the guest virtual machines 140 on the server apparatus 100 on which the unit itself is operating.

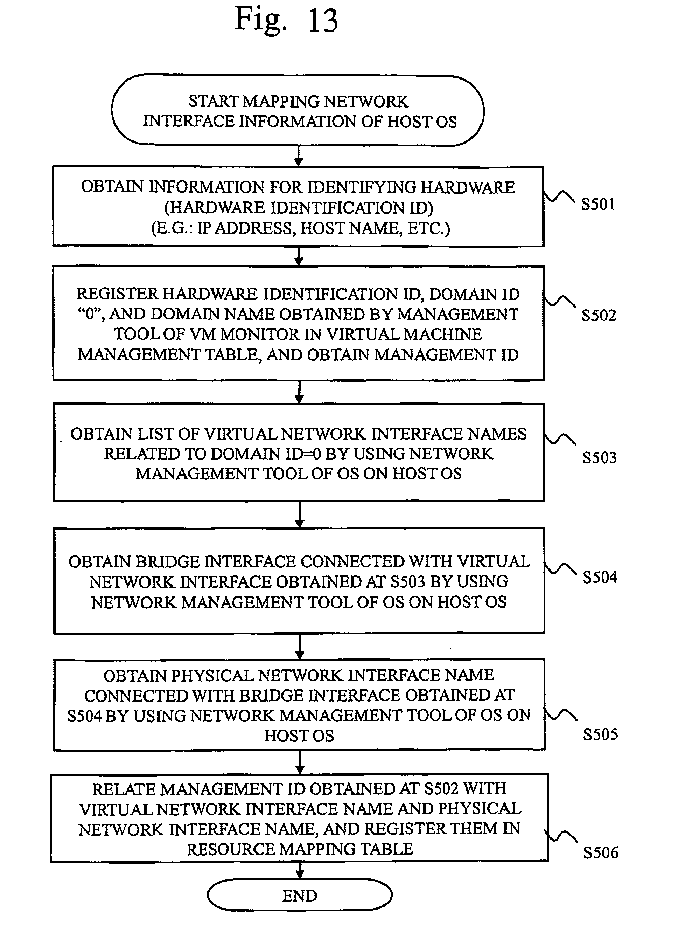

Fig. 13 is a flowchart showing a resource mapping information generating process between the network interface information of the host OS of the host virtual machine 120 (logical network interface information) and the physical network interface information being used by the host OS (physical network interface information) according to the first embodiment. Referring to Fig. 13, a method will be described for mapping the host OS of the host virtual machine 120 and the physical network interface information being used by the host OS (physical network interface information).

### <Resource mapping information generating process between the network interface information of the host OS and the physical network interface information>

It is assumed that the resource mapping information generating unit 1211 registers the management ID 211, the hardware identification ID 212, the domain ID 213, and the domain name 214 in the virtual machine management table 21 by relating them to one another (S501 to S502). These steps are the same as S301 to S302 shown in Fig. 11 so that they are not described here.

The resource mapping information generating unit 1211 obtains the management ID 211 of the host OS from the virtual machine management table 21 registered at S502.

Using the CPU, the resource mapping information generating unit 1211 obtains a list of virtual network interface names related to the domain ID for identifying the host virtual machine (host domain) indicated by the obtained management ID by using the network management tool of the OS (the inconfig command or the like) (which is an example of a tool included in the OS of the virtual computer or an example of a command included in the agent program) on the host OS of the host virtual machine 120 (S503). The file to be managed by the inconfig command or the like is an example of a resource-type-specific management file which contains resource-type-specific management information. For example, the resource mapping information generating unit 121 obtains the virtual network interface name list "vif0.0" related to the "host OS" of the domain ID "0" based on the management ID 211 "00001" obtained at S502. This is the virtual network interface name (logical resource) that is recognized by the host OS.

The resource mapping information generating unit 1211 obtains a bridge interface to which the virtual network interface name obtained at S503 is connected by using the network management tool of the OS (the brctl command or the like) (which is an example of a tool included in the virtual computer or an example of a command included in the agent program) on the host OS of the host virtual machine 120 (S504). For example, the resource mapping information generating unit 1211 obtains a bridge interface to which the virtual network interface name "vif0.0" is connected by using the network management tool of the OS (the brctl command or the like).

The resource mapping information generating unit 1211 obtains a physical network interface name connected with the bridge interface obtained at S504 by using the network management tool of the OS on the host OS of the host virtual machine 120 (S505). For example, the resource mapping information generating unit 1211 can obtain the physical network interface name "peth0" connected with the bridge interface to which "vif0.0" obtained at S504 is connected.

At S506, the resource mapping information generating unit 1211 sets the resource mapping table 13 as follows: the management ID 211 obtained at S502 is set as the management ID 131; the ID given, for example, sequentially to each resource of the host virtual machine 120 is obtained and set as the resource ID 132; "N/W. I/F" indicating the resource type of the network interface information is set as the resource type 133; the virtual network interface name (logical resource) being used by the host OS obtained at S503 is set as the identification name 135 on the host OS; and the physical network interface name obtained at S505 is set as the corresponding physical resource name 134. In this way, the resource mapping information generating unit 1211 registers the resource mapping table 13 in association with the management ID 211 of the virtual machine management table 21 obtained at S502 (S506). For example, the resource mapping information generating unit 1211 sets the resource mapping table 13 as follows: the management ID 211 "00001" obtained at S502 is set as the management ID 131; the ID "4" given to the resource of the host OS is set as the resource ID 132 ("1" to "3" are used for disk information resources in Fig. 10); "N/W. I/F" indicating the resource type of the network interface information is set as the resource type 133; the virtual network interface name "vif0.0" being used by the target guest OS obtained at S503 is set as the identification name 135 on the host OS; and the physical network interface name "peth0" obtained at S505 is set as the corresponding physical resource name 134.

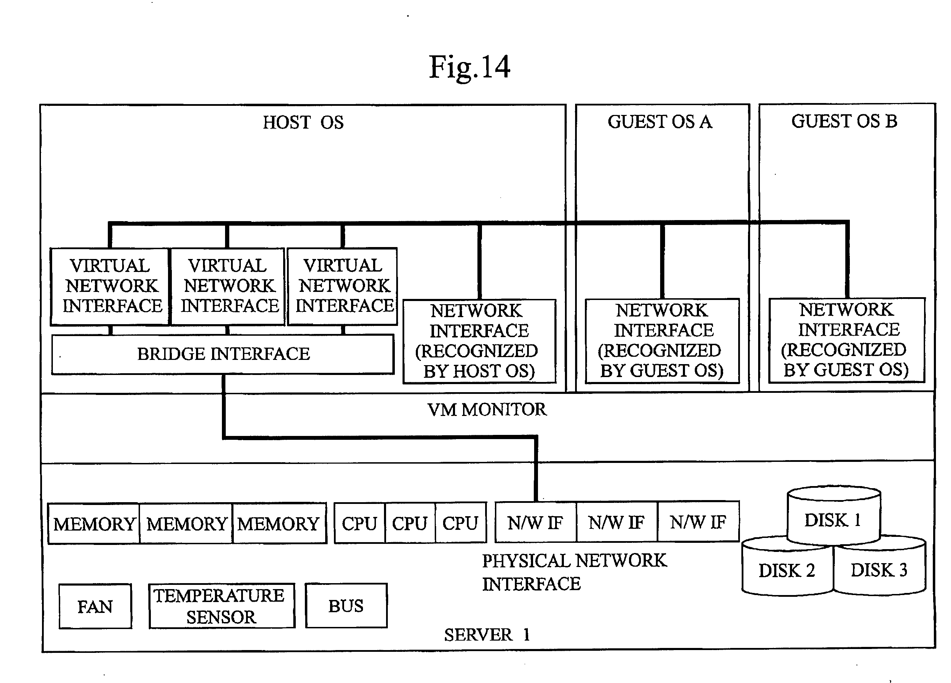

Fig. 14 is an interconnection diagram of the network interfaces, virtual network interfaces, bridge interface, and physical network interface recognized by each host OS and guest OS on the VM monitor 110 described in Figs. 12 and 13.

In the server apparatus 100 according to this embodiment, resources other than the above-described disk information and network interface information (for example, a CPU, a memory, a power supply, a fan, etc.) are all mapped as resources (logical resources) of the host OS in the resource mapping table 13.

Next, a fault determining step (a failed virtual machine identifying step) at S108 shown in Fig. 5 will be described with specific examples by using the resource mapping information 1221 generated by the resource mapping information generating process described above.

For example, suppose that a fault (failure) exists in the hard disk "/dev/sda" of the server apparatus 100. In the faulty physical resource identifying step (S 106 to S 107 in Fig. 5), the fault determining unit 1213 determines that a fault (failure) exists in the hard disk "/dev/sda" of the server apparatus 100 based on the fault condition of the ID "E0003" in the fault determination threshold information 1222. Using the CPU, the fault determining unit 1213 references the corresponding physical resource name 134 in the resource mapping table 13 of the resource mapping information 1221 stored in a storage device so that "00001" is obtained as the management ID 131 corresponding to the physical resource "/dev/sda". Using the CPU and based on the obtained management ID 131 "00001", the fault determining unit 1213 references the virtual machine management table 21, and extracts the management ID 211 "00001" matching "00001". At this time, in the virtual machine management table 21 the following are defined for the management ID 211 "00001": the hardware identification ID 212 is "server 1 (the server apparatus 100)", the domain ID is "0", and the domain name is "host OS". Thus, the fault determining unit 1213 can extract "host OS" as the virtual machine (domain) on the server apparatus 100 (the host OS or guest OS implemented on the server apparatus 100) from the virtual machine management table 21. In this way, the fault determining unit 1213 identifies the host virtual machine 120 as the failed virtual machine.

According to this embodiment, the resource mapping information generating unit 1211 generates the resource mapping information 1221 by mapping each resource used (recognized) by each virtual machine (each domain) implemented on the server apparatus 100 to a physical resource so that, upon detecting a hardware failure, the agent execution unit 121 can execute appropriate notification or stopping operation to the host virtual machine 120 or the guest virtual machine 140 (host OS or guest OS) related to the detected failure. Further, the executing of appropriate notification or stopping operation by the agent execution unit 121 to the host virtual machine 120 or the guest virtual machine 140 (host OS or guest OS) related to the detected failure allows the cluster software on the server 2 apparatus 200 on the other (standby) system to detect that the heartbeat has stopped and to switch the systems appropriately.

### Embodiment 2.

In the first embodiment, it has been described that the fault notifying unit 1214 of the agent execution unit 121 notifies the failed virtual machine to stop the OS. In a second embodiment, the fault notifying unit 1214 of the agent execution unit 121 notifies the host OS of the host virtual machine 120, or the cluster software 107 or 109 on each guest OS of the guest virtual machines 140a and 140b for the purpose of notifying the fault only, for example, instead of stopping the OS.

In a server apparatus having a virtual environment and so on, there may be a case, such as delayed read/write response from a hard disk due to concentration of processing load, where no immediate operational failure occurs but it is desirable to alert a virtual machine. That is, there may be a case where the operating condition of a physical resource of the server apparatus 100 is "slightly less faulty" than "a faulty operating condition" that would require the OS to be stopped. In such a case, the agent execution unit 121 "alerts" the OS instead of immediately stopping the OS.

A fault notification process of the fault notifying unit 1214 according to this embodiment can be implemented by defining the fault determination threshold information 1222 shown in Fig. 6 as described below. In the fault determination threshold information 1222, the fault determination threshold 1113 for the physical resource operating condition ID 1111 of "E00007" is defined with regard to the disk read response time as "10 seconds > response time READ > 5 seconds". This threshold is slightly closer to the normal compared to the fault determination threshold 1113 for "E00003". Thus, the threshold is set at a level for alerting the OS instead of stopping the OS. Accordingly, "Nofity syslog to host OS" is set as the fault notification information 1114 in this case (for the physical resource operating condition ID 1111 of "E00007"). If the failed virtual machine is a guest OS, for example, it may be desirable to notify syslog to the host OS as well as to the failed guest OS. In such a case, it is possible to specify the notification destinations in the fault notification information 1114, such as "Notify syslog to host OS, notify syslog to OS of failed virtual machine".

This allows the fault notifying unit 1214 to alert the OS or cluster software of the failed virtual machine either directly or by means of a log management system of the OS (syslog, event log, and so on) when the physical resource operating condition ID1111 is "E00007". The operation of the host OS or the guest OS after receiving an alert notification can be implemented as defined in the cluster software.

According to this embodiment, it is possible to define the processing to be performed according to the content of failure, such as stopping the OS or performing notification, making it possible to create a situation where existing cluster software can perform system control operation based on the settings of the cluster software according to the content of notification from the agent.

### Embodiment 3.

In the first embodiment, the means by which the agent execution unit 121 automatically generates the resource mapping information 1221 has been described. In a third embodiment, a method will be described for manually defining the resource mapping information.

In the first embodiment, it has been described how the resource mapping information generating unit 1211 automatically generates the resource mapping information between the disk information and network interface information recognized by the host virtual machine 120 and the guest virtual machines 140a and 140b (host OS/guest OS) and the physical disk information and network interface information.

In the VM monitor 110 (VM environment) of the server apparatus 100, however, resources may be allocated to a guest virtual machine (guest OS) based on the memory or CPU usage rates. In this case, it is not possible to automatically determine to which slot number of memory or to which CPU core in the server housing is a logical resource used by the guest OS allocated, and so on. Thus, there may be cases where clear mapping cannot be performed automatically.

To deal with such a situation, a method is provided whereby a user (such as an administrator or a designer) manually defines the resource mapping information. The method of generating the resource mapping information manually by the user is implemented, for example, by the method shown below. The user pre-configures the virtual machine management table 21 shown in Fig. 9 and the resource mapping table 13 shown in Fig. 10 in CSV (comma separated values) files or the like and stores them in a storage device. The agent execution unit 121, upon being started, loads the CSV files or the like containing the contents of the virtual machine management table 21 and the resource mapping table 13 from the storage device, imports them into the virtual machine management table 21 and the resource mapping table 13, and stores the tables in a storage device as the resource mapping information 1221. In this way, the resource mapping information 1221 is manually generated and stored in a storage device. The processing thereafter is the same as described in the first embodiment.

According to the first to third embodiments, the server apparatus 100 having the following characteristics has been described.

A redundancy method and a system using this method in a virtual environment according to the first to third embodiments, the system being provided with an agent for detecting a hardware failure in a virtual environment, are **characterized in that**
the agent includes:
a resource mapping means for periodically mapping logical resources and physical resources of each domain (host OS or guest OS);
a fault monitoring means for monitoring hardware operating conditions on a host OS and for collecting housing information and hardware information about a CPU, a memory, a hard disk, and a network interface card;
a fault determining means for determining a domain related to a hardware failure in hardware operating information collected by the fault monitoring unit based on predefined fault determination threshold information and resource mapping information mapped by the resource mapping means; and
a fault notifying means for performing log notification to the host OS or the guest OS, or for stopping the host OS or the guest OS, according to hardware fault information determined by the fault determining means,
wherein the agent performs failure notification to a domain related to a detected hardware failure, or stops the domain.

Another characteristic is that it is possible to create a situation where the host OS or the guest OS can be stopped according to the content of failure detected by the agent, so that off-the-shelf software deployed on each guest OS of another system can implement system switching.

Still another characteristic is that in the fault determining means of the agent it is possible to defme, in fault determination threshold information, threshold information for identifying whether or not the collected hardware information is a failure and the content of notification or domain stopping operation to be performed if a failure is determined.

Still another characteristic is that the resource mapping means of the agent allows resource mapping information to be manually defined in addition to periodic automatic resource mapping.

Having thus described the first to third embodiments, it is to be understood that two or more of these embodiments may be implemented in combination. Alternatively, any one of these embodiments may be implemented in part. Alternatively, two or more of these embodiments may be implemented in part and in combination.

In the agent execution unit 121 according to the first to third embodiments, the resource mapping information generating unit 1211, the resource mapping information storing unit, the fault monitoring unit 1212, the fault determining unit 1213, and the fault notifying unit 1214 are configured as independent functional blocks. They may also be implemented as a single functional block. Alternatively, the resource mapping information generating unit 1211 and the resource mapping information storing unit may be implemented as a single functional block. Alternatively, all functional blocks may be implemented as independent functional blocks. Alternatively, these functional blocks may be configured in any other combinations.

In the server apparatus and the fault detection method of a server apparatus according to the first embodiment, hardware such as a CPU (a processing device) and a storage device is employed, and information processing by software is concretely realized by utilizing hardware. In other words, the server apparatus and the fault detection method of a server apparatus according to the above-described first to third embodiments are realized by hardware operations utilizing the law of nature, thereby constituting a technical creation utilizing the law of nature.

### Brief Description of the Drawings

Fig. 1 is a diagram showing an example of an appearance of a server apparatus 100 and a server 2 apparatus according to a first embodiment.
Fig. 2 is a diagram showing an example of hardware resources of the server apparatus 100 and the server 2 apparatus.
Fig. 3 is a system block diagram of a redundant system 800 according to the first embodiment.
Fig. 4 is a block diagram showing a configuration of functional blocks of an agent execution unit 121 of the server apparatus 100 according to the first embodiment.
Fig. 5 is a flowchart showing processing operations of a fault detection method of the server apparatus 100 according to the first embodiment.
Fig. 6 is a diagram showing a table configuration of fault determination threshold information 1222.
Fig. 7 is a diagram showing operations at system switching in the redundant system 800 according to the first embodiment.
Fig. 8 is a flowchart showing a resource mapping information generating process between the disk information that can be recognized by a host OS of a host virtual machine on which the agent execution unit 121 is operating (here, disk information of a guest virtual machine) and the physical disk information actually used by the guest virtual machine.
Fig. 9 is a diagram showing a table configuration of a virtual machine management table of resource mapping information.
Fig. 10 is a diagram showing a configuration of a resource mapping table of resource mapping information.
Fig. 11 is a flowchart showing a resource mapping information generating process between the disk information of the host OS of a host virtual machine 120 (logical disk information) and the physical disk information being used by the host OS (physical disk information) according to the first embodiment.
Fig. 12 is a flowchart showing a resource mapping information generating process regarding the network interface information of a guest virtual machine according to the first embodiment.
Fig. 13 is a flowchart showing a resource mapping information generating process between the network interface information of the host OS of the host virtual machine 120 (logical network interface information) and the physical network interface information being used by the host OS (physical network interface information) according to the first embodiment.
Fig. 14 is an interconnection diagram of the network interfaces, virtual network interfaces, bridge interface, and physical network interface recognized by each host OS and guest OS on a VM monitor 110 described in Figs. 12 and 13.

### Description of Reference Numerals

13: resource mapping table; 21: virtual machine management table; 100: server apparatus; 101: LAN, 107, 109: cluster software; 110: VM monitor; 115, 117: cluster software; 120: host virtual machine; 121: agent execution unit; 131: management ID; 132: resource ID; 133: resource type; 134: corresponding physical resource name; 135: identification name on the host OS; 140: guest virtual machine; 140a: guest virtual machine A; 140b: guest virtual machine B; 200: server 2 apparatus; 210: VM monitor; 211: management ID; 212: hardware identification ID; 213: domain ID; 214: domain name; 220: host virtual machine'; 240a: guest virtual machine A'; 240b: guest virtual machine B'; 221: agent execution unit; 800: redundant system; 901: display device; 902: keyboard; 903: mouse; 904: FDD; 905: CDD; 906: printer device; 907: scanner device; 910: system unit; 911: CPU; 912: bus; 913: ROM; 914: RAM; 915: communication board; 920: magnetic disk device; 921: OS; 922: window system; 923: group of programs; 924: group of files; 931: telephone; 932: facsimile machine; 942: LAN; 940: Internet; 941: gateway, 1111: ID; 1112: target hardware; 1113: fault determination threshold; 1114: fault notification information; 1211: resource mapping information generating unit; 1212: fault monitoring unit; 1213: fault determining unit; 1214: fault notifying unit; 1221: resource mapping information; 1222: fault determination threshold information; 1223: failure information database; 1224: physical resource operating information; 9200: VM monitor.

## Claims

1. A server apparatus for implementing a plurality of virtual computers by using physical resources, the server apparatus implementing the plurality of virtual computers such that a physical resource used by each one of the plurality of virtual computers out of the physical resources is used as a logical resource, the server apparatus comprising:
an agent execution unit for detecting a fault in a physical resource,
wherein the agent execution unit includes:
a resource mapping information generating unit for generating resource mapping information by mapping the logical resource to a physical resource of the server apparatus;
a resource mapping storing unit for storing in a storage device the resource mapping information generated by the resource mapping information generating unit;
a fault monitoring unit for collecting and storing in a storage device physical resource operating information indicating an operating condition of a physical resource;
a fault determining unit for determining by a processing device whether or not the physical resource operating information collected by the fault monitoring unit contains information on a physical resource with a faulty operating condition and, in case that information on a physical resource with a faulty operating condition is contained, for identifying by a processing device a virtual computer using a logical resource mapped to the physical resource with a faulty operating condition, based on the information on the physical resource with a faulty operating condition and the resource mapping information; and
a fault notifying unit for notifying the virtual computer identified by the fault determining unit, according to the information on the physical resource with a faulty operating condition.

2. The server apparatus of claim 1,
wherein the resource mapping information generating unit periodically generates the resource mapping information.

3. The server apparatus of claim 2,
wherein the server apparatus includes, for each one of the plurality of virtual computers, a virtual-computer-specific resource management file which contains virtual-computer-specific resource management information for mapping a logical resource used by the virtual computer to a physical resource; and
wherein the resource mapping information generating unit obtains the virtual-computer-specific resource management information including a physical resource from the virtual-computer-specific resource management file, and, based on the virtual-computer-specific resource management information obtained, generates as the resource mapping information a resource mapping table by mapping a logical resource used by each one of the plurality of virtual computers to a physical resource of the server apparatus.

4. The server apparatus of claim 3,
wherein the server apparatus includes, for each resource type, a resource-type-specific management file which contains resource-type-specific management information for mapping a logical resource of the type to a physical resource of the type; and
wherein the resource mapping information generating unit obtains the resource-type-specific management information from the resource-type-specific management file corresponding to the type of a logical resource used by each one of the plurality of virtual computers, and, based on the resource-type-specific management information obtained, generates the resource mapping information by mapping a logical resource used by each one of the plurality of virtual computers to a physical resource of the server apparatus.

5. The server apparatus of claim 1,
wherein the agent execution unit executes an agent program which is executed under an OS (operating system) of a virtual computer; and
wherein the resource mapping information generating unit finds out a physical resource used by a logical resource by using a tool included in the OS of the virtual computer or using a command included in the agent program.

6. The server apparatus of claim 1,
wherein the agent execution unit further includes a fault determination threshold information storing unit for pre-storing in a storage device fault determination threshold information defining a threshold for determining whether or not an operating condition of a physical resource is faulty and fault notification information to be notified, in case that an operating condition of a physical resource is determined faulty based on the threshold, to a virtual computer using a logical resource mapped to the physical resource whose operating condition is determined faulty; and
wherein the fault notifying unit performs notification based on the fault notification information defined in the fault determination threshold information.

7. The server apparatus of claim 1, wherein only one virtual computer among the plurality of virtual computers has the agent execution unit.

8. The server apparatus of claim 1,
wherein the resource mapping information generating unit obtains by a processing device a resource mapping file that has been previously created by mapping the logical resource to a physical resource of the server apparatus and stored in a storage device, and uses the resource mapping file obtained as the resource mapping information.

9. A fault detection method of a server apparatus for implementing a plurality of virtual computers by using physical resources, the server apparatus implementing the plurality of virtual computers such that a physical resource used by each one of the plurality of virtual computers out of the physical resources is used as a logical resource, the fault detection method of a server apparatus comprising:
an agent execution step of detecting a fault in a physical resource by an agent execution unit,
wherein the agent execution step includes:
a resource mapping information generating step in which a resource mapping information generating unit generates resource mapping information by mapping the logical resource to a physical resource of the server apparatus;
a resource mapping storing step in which a resource mapping storing unit stores in a storage device the resource mapping information generated by the resource mapping information generating step;
a fault monitoring step in which a fault monitoring unit collects and stores in a storage device physical resource operating information indicating an operation condition of a physical resource;
a fault determining step in which a fault determining unit determines by a processing device whether or not the physical resource operating information collected by the fault monitoring step contains any information on a physical resource with a faulty operating condition, and, in case that information on a physical resource with a faulty operating condition is contained, identifies by a processing device a virtual computer using a logical resource mapped to the physical resource with a faulty operating condition based on the information on the physical resource with a faulty operating condition and the resource mapping information; and
a fault notifying step in which a fault notifying unit notifies the virtual computer identified by the fault determining step, according to the information on the physical resource with a faulty operating condition.

10. A fault detection program of a server apparatus for causing a computer to execute the fault detection method of a server apparatus of claim 9.
